# EUROPEAN PATENT APPLICATION

(11) **EP 3 139 019 A1**
(43) Date of publication of application: **08.03.2017**
(21) Application number: 16186710.6
(22) Date of filing: 31.08.2016
(51) Int. Cl.: F02C 7/18, H05K 7/20

(54) **COOLED INFORMATION NODE**

(30) Priority: 31.08.2015 US 201562212214 P; 14.09.2015 US 201514853449
(71) Applicant: United Technologies Corporation, Farmington, CT 06032 (US)
(72) Inventor: EPSTEIN, Alan H., Lexington, MA 02421 (US)
(74) Representative: Hague, Alison Jane

(57) **Abstract**

An information node (100) is presented for use within a thermally challenged environment. The cooled information node has a case (110) with a thermoelectric conditioner (120). A thermoelectric controller (190) contained within the case operates the thermoelectric conditioner (120). A transceiver/power conditioner (160) connects to both the thermoelectric controller (190) and a processor (180) and is configured to receive and transmit data signals from an outside source (65). The cooled information node (100) also has a signal input/output module connected to each of the transceiver/power conditioner (160), the processor (180) and the thermoelectric controller (190). The signal input/output module is configured to receive and transmit another data signal from another outside source (80). The information node (100) may be used within an electronic network connecting multiple outside sources (100) to a central source (65). Furthermore, the information node (100) may be used within a gas turbine engine (20) for communication between engine components (80) and the electronic engine control (65) of the gas turbine engine.

## Description

### FIELD OF DISCLOSURE

The present disclosure generally relates to electronic systems of a gas turbine engines, and more particularly to thermally cooling an information node of the gas turbine engine.

### BACKGROUND OF THE DISCLOSURE

Gas turbine engines are commonly used to generate energy and propulsion in many modern aircraft as well as other vehicles and industrial processes. Many such engines include a fan, compressor, combustor and turbine provided in serial fashion, forming an engine core and arranged along a central longitudinal axis. Additionally, information systems are needed for proper operation of a gas turbine engine. These informational systems relay information from the specific components of the gas turbine engine back to an electronic engine control. The information relayed can vary depending on which engine component is being operated or analyzed. The information can include operation conditions of the gas turbine engine, control commands given to specific units, and the transmission of specific component health and faults.

The space available to place such information systems and the corresponding interconnections within a gas turbine engine is rather limited. Therefore, the majority of these informational systems are located near or adjacent to the specific engine component the information systems operate or analyze. Placing these information systems in such a fashion puts the functional components and interconnections of these information systems near the combustor, turbine, compressor, or other mechanical systems of the gas turbine engine.

Because these information systems are located near the mechanically operated components of the gas turbine engine, they are subjected to extreme internal temperatures and weather conditions when the gas turbine engine is in operation. Accordingly, such information systems need to be manufactured robustly so as to handle such conditions. Many issues can occur which may cause these information systems to fail. However, the heat produced by the gas turbine engine while in operation is a main contributor to the failure of these information systems.

Current information systems report back informational data to an electronic engine control. The electronic engine control is placed in a relatively cool location on the gas turbine engine. Architecture such as this requires a relatively large number of interconnections between sensors, actuators, and the multiple controllers with which the electronic engine control communicates. This leads to very complex wiring that is heavy and time consuming to install and maintain. Additionally, the limited space available to place such electronics within the gas turbine engine inhibits the adoption of many possible network architectures which may benefit overall engine design.

Furthermore, it is costly to develop informational systems that are heat resistant to the temperatures reached by a gas turbine engine. The thermal conditions of the gas turbine engine are not conducive to battery options as a viable power source. Moreover, it is not feasible to place the informational systems completely remote from the electronic engine control and base communication with the electronic engine control on wireless capabilities. Wireless communication through frequency channels would be a comprise at best and could add to safety concerns, radio interference, and logistical problems.

Therefore, it would be advantageous to produce an information node for use in an information system that is universal in nature and able to address these concerns.

### SUMMARY OF THE DISCLOSURE

In accordance with one aspect of the disclosure, an information node for use within a thermally challenged environment is disclosed. The information node has a case with a thermoelectric conditioner. A thermoelectric controller is contained within the case and controls the thermoelectric conditioner. A transceiver/power conditioner is connected to both the thermoelectric controller and a processor. The transceiver/power conditioner is configured to receive and transmit a first data signal and power from a first outside source. Also contained within the information node is a signal input/output module. The signal input/output module is connected to each the transceiver/power conditioner, the processor and the thermoelectric controller and configured to receive and transmit a second data signal from a second outside source.

In an additional and/or alternative embodiment of any of the foregoing embodiments, wherein the thermoelectric controller, the transceiver/power conditioner, the processor, and the signal input/output module are contained as part of a common chip set.

In an additional and/or alternative embodiment of any of the foregoing embodiments, the thermoelectric controller has a temperature sensor and connects to a thermoelectric conditioner path of the case with the thermoelectric conditioner.

In an additional and/or alternative embodiment of any of the foregoing embodiments, the thermoelectric conditioner path is in contact with a thermal conduction path, the thermal conduction path being filled with an optional medium.

In an additional and/or alternative embodiment of any of the foregoing embodiments, the transceiver/power conditioner is connected to the first outside source to send and receive the first data signal and power through at least one data/power transmission line.

In an additional and/or alternative embodiment of any of the foregoing embodiment, the signal input/output module contains both an analog input and output module and a digital input and output module, the analog input and output module being configured to send and receive the second data signal from the second outside source and the digital input and output module being configured to send and receive the second data signal from the second outside source.

In an additional and/or alternative embodiment of the foregoing embodiment, wherein the signal input/output module further contains a transducer, the transducer configured to send and receive the second data signal from the second outside source.

In an additional and/or alternative embodiment of any of the foregoing embodiments, a signal conditioning module connects to the analog input and output module. The signal condition module is configured to send and receive the second data signal from the second outside source.

In accordance with another aspect of the disclosure, a gas turbine engine is formed having at least one engine component, an electronic engine control and at least one information node. The at least one information node having a case with a thermoelectric conditioner. A thermoelectric controller is contained within the case of the at least one information node and controlling the thermoelectric conditioner. A transceiver/power conditioner connected to both the thermoelectric controller and a processor within the at least one information node. The transceiver/power conditioner of the at least one information node configured to receive and transmit a first data signal and power from the electronic engine control. Also contained within the at least one information node is a signal input/output module. The signal input/output module is connected to each the transceiver/power conditioner, the processor and the thermoelectric controller and configured to receive and transmit a second data signal from the at least one engine component to which the at least one information node is connected.

In an additional and/or alternative embodiment of any of the foregoing embodiments, wherein the thermoelectric controller, the transceiver/power conditioner, the processor, and the signal input/output module of the at least one information node are contained as part of a common chip set.

In an additional and/or alternative embodiment of any of the foregoing embodiments, the thermoelectric controller of the at least one information node has a temperature sensor and connects to a thermoelectric conditioner path of the case with the thermoelectric conditioner.

In an additional and/or alternative embodiment of any of the foregoing embodiments, the thermoelectric conditioner path of the at least one information node is in contact with a thermal conduction path, the thermal conduction path being filled with an optional medium.

In an additional and/or alternative embodiment of any of the foregoing embodiments, the transceiver/power conditioner of the at least one information node is connected to the electronic engine control to send and receive the first data signal and power through at least one data/power transmission line.

In an additional and/or alternative embodiment of any of the foregoing embodiment, the signal input/output module of the at least one information node contains both an analog input and output module and a digital input and output module, the analog input and output module being configured to send and receive the second data signal from the at least one engine component and the digital input and output module being configured to send and receive the second data signal from the at least one engine component.

In an additional and/or alternative embodiment of the foregoing embodiment, wherein the signal input/output module further contains a transducer, the transducer configured to send and receive the second data signal from the at least one engine component.

In an additional and/or alternative embodiment of any of the foregoing embodiments, a signal conditioning module connects to the analog input and output module of the at least one information node. The signal condition module is configured to send and receive the second data signal from the at least one engine component.

In accordance with another aspect of the disclosure, a network of information nodes for used within a thermally challenged environment is disclosed. The network contains an electronic engine control and a plurality of information nodes. The plurality of information nodes each have a case with a thermoelectric conditioner. A thermoelectric controller is contained within the case of each of the plurality of information nodes and controls the thermoelectric conditioner. A transceiver/power conditioner is connected to both the thermoelectric controller and a processor in each of the plurality of information nodes. The transceiver/power conditioner is configured to receive and transmit a first data signal and power from the electronic engine control. Also contained within each of the plurality of information nodes is a signal input/output module. The signal input/output module is connected to each the transceiver/power conditioner, the processor and the thermoelectric controller of each of the plurality of information nodes and configured to receive and transmit a second data signal from an outside source.

In an additional and/or alternative embodiment of any of the foregoing embodiment, each of the plurality of information nodes is connected to the electronic engine control through a data/power transmission line.

In an additional and/or alternative embodiment of any of the foregoing embodiment, the data/power transmission line is a common data/power transmission line to which each of the plurality of information nodes connects to forming a linear architecture configuration.

In an additional and/or alternative embodiment of any of the foregoing embodiment, each of the plurality of information nodes is connected to the electronic engine control through a single data/power transmission line connecting each of the plurality of information nodes individually to the electronic engine control.

In one aspect an information node is provided. The information node including: a case with a thermoelectric conditioner; a processor, the processor programmable to control the function of the information node; a thermoelectric controller operable to control the thermoelectric conditioner; an input configured to receive data from at least one component; and an output configured to transmit data to a controller.

In addition to one or more of the features described above, or as an alternative to any of the forgoing embodiments, the output configured to transmit data to the controller may be connected to a transceiver/power conditioner within the information node, the transceiver/power conditioner being in communication with the thermoelectric controller and the processor of the information node.

In addition to one or more of the features described above, or as an alternative to any of the forgoing embodiments, the thermoelectric controller, the transceiver/power conditioner, the processor, the input, and the output may be contained as part of a common chip set.

In addition to one or more of the features described above, or as an alternative to any of the forgoing embodiments, the thermoelectric controller may have a temperature sensor and may be in communication with a thermoelectric conditioner path of the case with the thermoelectric conditioner.

In addition to one or more of the features described above, or as an alternative to any of the forgoing embodiments, the transceiver/power conditioner may be in communication with the controller to send and receive a first data signal and power through at least one data/power transmission line.

In addition to one or more of the features described above, or as an alternative to any of the forgoing embodiments, the input may contain both an analog input and output module and a digital input and output module, the analog input and output module being configured to send and receive a second data signal from the second outside source and the digital input and output module being configured to send and receive the second data signal from the second outside source.

In addition to one or more of the features described above, or as an alternative to any of the forgoing embodiments, the input may further contain a transducer, the transducer configured to send and receive the second data signal from the second outside source.

In addition to one or more of the features described above, or as an alternative to any of the forgoing embodiments, a signal conditioning module may be in communication with the analog input and output module, the signal conditioning module being configured to send and receive the second data signal from the second outside source.

In another aspect a gas turbine engine is provided. The gas turbine engine including at least one engine component; an electronic engine control; and at least one information node, the at least one information node including a case with a thermoelectric conditioner, a processor programmable to control the function of the at least one information node, a thermoelectric controller operable to control the thermoelectric conditioner, an input configured to receive data from the at least one engine component, and an output configured to transmit data to the electronic engine control.

In addition to one or more of the features described above, or as an alternative to any of the forgoing embodiments, the output configured to transmit data to the electronic engine control may be connected to a transceiver/power conditioner within the at least one information node, the transceiver/power conditioner being in communication with the thermoelectric controller and the processor of the at least one information node.

In addition to one or more of the features described above, or as an alternative to any of the forgoing embodiments, the thermoelectric controller, the transceiver/power conditioner, the processor, the input, and the output of the at least one information node may be contained as part of a common chip set.

In addition to one or more of the features described above, or as an alternative to any of the forgoing embodiments, the thermoelectric controller of the at least one information node may have a temperature sensor and may connect to a thermoelectric conditioner path of the case with the thermoelectric conditioner.

In addition to one or more of the features described above, or as an alternative to any of the forgoing embodiments, the transceiver/power conditioner of the at least one information node may be in communication with the electronic engine control to send and receive a first data signal and power through at least one data/power transmission line.

In addition to one or more of the features described above, or as an alternative to any of the forgoing embodiments, the input of the at least one information node may contain both an analog input and output module and a digital input and output module, the analog input and output module being configured to send and receive a second data signal from the at least one engine component and the digital input and output module being configured to send and receive the second data signal from the at least one engine component.

In addition to one or more of the features described above, or as an alternative to any of the forgoing embodiments, the input of the at least one information node further may contain a transducer, the transducer configured to send and receive the second data signal from the at least one engine component.

In addition to one or more of the features described above, or as an alternative to any of the forgoing embodiments, a signal conditioning module may connect to the analog input and output module of the at least one information node, the signal conditioning module being configured to send and receive the second data signal from the at least one engine component.

In another aspect a network of information nodes for use within a thermally challenged environment is provided. The network including: an electronic engine control; and a plurality of information nodes in communication with the electronic engine control, the plurality of information nodes each having a case with a thermoelectric conditioner, a processor programmable to control the function of the at least one information node, a thermoelectric controller operable to control the thermoelectric conditioner, an input of each of the plurality of information nodes configured to receive data from at least one engine component, and an output of each of the plurality of information nodes configured to transmit data to the electronic engine control.

In addition to one or more of the features described above, or as an alternative to any of the forgoing embodiments, the output of each of the plurality of information nodes configured to transmit data to the electronic engine control may be connected to a transceiver/power conditioner within each of the plurality of information nodes, the transceiver/power conditioner being in communication with the thermoelectric controller and the processor of each of the plurality of information nodes, and each of the plurality of information nodes being connected to the electronic engine control through a data/power transmission line.

In addition to one or more of the features described above, or as an alternative to any of the forgoing embodiments, the data/power transmission line may be a common data/power transmission line to which each of the plurality of information nodes connects forming a linear architecture configuration.

In addition to one or more of the features described above, or as an alternative to any of the forgoing embodiments, each of the plurality of information nodes may be connected to the electronic engine control through a single data/power transmission line connecting each of the plurality of information nodes individually to the electronic engine control.

These and other aspects and features will be better understood when taken in conjunction with the following drawings.

### BRIEF DESCRIPTION OF THE DRAWINGS

Figure 1 is a cross-sectional view of a gas turbine engine constructed in accordance with an embodiment.
Figure 2 is a cross-sectional view of a gas turbine having an electronic engine control in accordance with an embodiment.
Figure 3 is a cross-sectional view of a gas turbine having an electronic engine control with the disclosed information nodes in accordance with an embodiment.
Figure 4 is a schematic view of the disclosed information node in accordance with an embodiment.
Figure 5 is an alternate schematic view of the disclosed information node in accordance with an embodiment.
Figure 6 is a network architecture view of the disclosed information nodes connected in a linear fashion to the electronic engine control in accordance with an embodiment.
Figure 7 is a network architecture view of the disclosed information nodes connected to the electronic engine control in a star fashion in accordance with an embodiment.

It should be understood that the drawings are not necessarily to scale and that the disclosed embodiments are illustrated diagrammatically and in partial views. It should be further understood that this disclosure is not to be limited to the particular embodiments illustrated herein.

### DETAILED DESCRIPTION OF THE DISCLOSURE

An information node is presented for use within a thermally challenged environment. The thermally challenged environment may be any type of environment in which heat sources raise the environment temperature to a point where correct operation of electronic components becomes difficult without proper protection and cooling assistance. Such an information node may operate in a thermally challenged environment such as a gas turbine engine. Additionally, the information node may also operate within other engines and electronic components working in similar thermal environments.

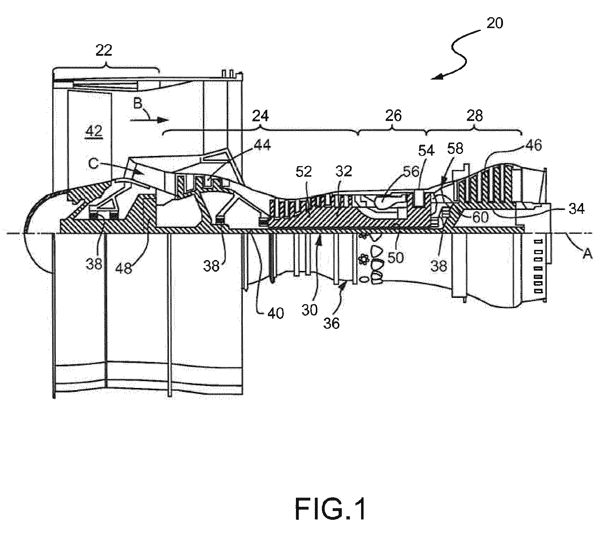

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. In aerospace applications providing thrust, the fan section 22 drives air along a bypass flow path B in a bypass duct defined within a nacelle, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to all other types of turbine engines including one and three-spool architectures. In addition, in power generation applications, such as APUs and land based generators, a fan need not be employed.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. A mid-turbine frame 58 of the engine static structure 36 is arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft, with the engine at its best fuel consumption - also known as "bucket cruise Thrust Specific Fuel Consumption ('TSFC')" - is the industry standard parameter of Ibm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second.

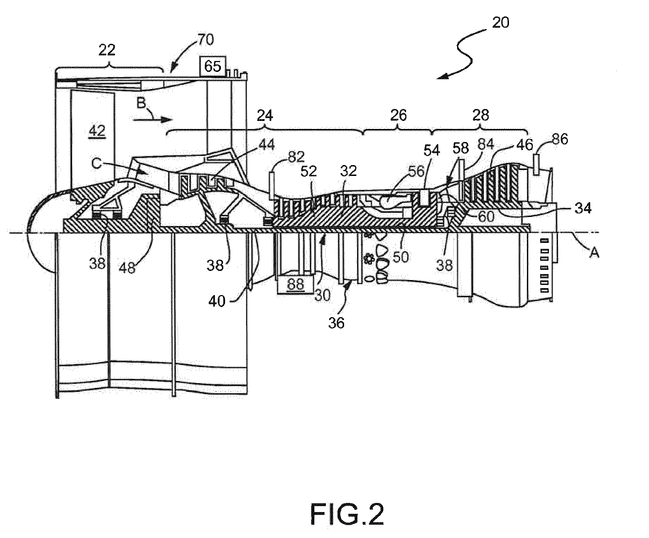

Referring now to Figure 2, the gas turbine engine 20 as disclosed above is depicted with an electronic engine control 65 located within the gas turbine engine. The electronic engine control 65 is an operational system within the gas turbine engine capable of controlling the multiple electronic components, such as actuators, sensors, or the like, located throughout the gas turbine engine 20. The electronic engine control 65 assures optimal performance of the gas turbine engine 20 by receiving and monitoring information from the multiple sensors while communicating and directing actuators to adjust in response to commands issued by the electronic engine control 65.

The electronic engine control 65 is typically located above the fan 42 of the gas turbine engine 20 within a fan case 70. The electronic engine control 65 is generally kept in a relatively cool location of the gas turbine engine 20. However, operation of the gas turbine engine 20 produces extreme temperatures often in excess of 800 degrees Fahrenheit. These extreme operational temperatures can damage and affect the electronics of the electronic engine control 65. By placing the electronic engine control 65 within the fan case 70 of the gas turbine engine 20, such electronics can be kept relatively cool as the fan case 70 is relatively cool compared to surrounding other locations which may house the electronic engine control 65.

Additionally the electronic engine control 65 may be cooled by operational systems. Fuel or forced air may be in contact with the electronic engine control 65 at its location within the fan case 70. The contact between the fuel or forced air aids in drawing heat from the electronic engine control 65 to ensure the internal electronics of the electronic engine control 65 can maintain operation within a safe temperature range. Furthermore, in alternate embodiments of the present disclosure the electronic engine control 65 may be placed in alternative cool locations around the aircraft. An additional cool location for possible electronic engine control placement is the electronic equipment bay (not shown) of the aircraft. The electronic equipment bay location on the aircraft also provides a safe operating temperature environment for the internal electronics of the electronic engine control 65.

Still referring to Figure 2, various engine components 80 are located throughout the gas turbine engine 20. These engine components 80, in one embodiment of the present disclosure, may be sensors such as a compressor sensor 82, a turbine sensor 84, and an exhaust sensor 86. Additionally, in another embodiment of the present disclosure the engine component 80 may be an actuator 88 used to help control the compressor section 24 of the gas turbine engine 20. All of these various engine components 80 connect back to the electronic engine control 65 through an interconnection of wires. Because of the voluminous number of wires and the complexity of the interconnections needed to accurately illustrate each and every possible interconnection possible, visual representation of all such interconnections is not shown, but will be discussed in terms of their nature and purpose below.

In traditional gas turbine engine design, the number of interconnections needed to connect all the multiple engine components 80 back to the electronic engine control 65 are extremely numerous. During assembly of the gas turbine engine 20 it may take a technician many hours of labor to correctly connect each of the multiple engine components 80 back to the electronic engine control 65. Furthermore, the engine components 80 are located deep within the gas turbine engine 20 and subjected to extreme operational temperatures. Because of this, specialty harnesses resistant to high thermal temperature are needed to keep the multiple interconnection wires in place. Moreover, the interconnection wires should be properly shielded with temperature resistant insulation so that communication between the multiple engine components 80 and the electronic engine control 65 is not disrupted during operation. In addition to these complex interconnection wires fitting within the limited spatial confines of the gas turbine engine 20, the interconnection wires should be shielded from outsides interference, such as radio frequencies and lightning strikes that may disrupt the communication signals sent between the electronic engine control 65 and the engine components 80. An information node 100 may be introduced to connect the multiple engine components 80 to the electronic engine control 65 thereby reducing the complexity of the wiring system.

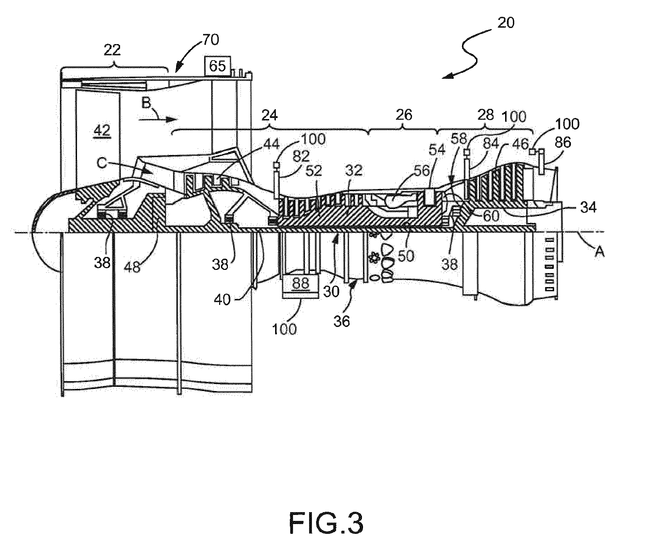

Referring now to Figure 3, the multiple engine components 80 of the gas turbine engine 20 are provided with the information node 100 attached to each of the engine components 80. This information node 100, as will be described in detail below, has sufficient thermal architecture to withstand the extreme operational temperatures of the gas turbine engine 20. Therefore, this informational node 100 may be attached directly to the engine component 80 for which it is responsible within the thermally challenged environment of the gas turbine engine 20. These information nodes 100 act to reduce the number of interconnections needed between the multiple engine components 80 and the electronic engine control 65. In one example, the exhaust sensor 86 of the gas turbine engine 20 may have a rake configuration. In such a rake configuration multiple outputs, for example six to eight reading outputs, are necessary to adequately convey the information needed by the electronic engine control 65 to determine if the exhaust section of the gas turbine engine 20 is working correctly. In a traditional gas turbine engine design, each of these six to eight outputs of the exhaust sensor 86 would be interconnected individually with the electronic engine control 65. Each of the individual outputs may in turn need at least two communication wires connecting the exhaust sensor 86 to the electronic engine control 65. Therefore, the total number of interconnections needed in such a conventional system would be in the range of twelve to sixteen wires running from the aft of the gas turbine engine 20 to the electronic engine control 65. However, with use of the information node 100 as disclosed herein, the number of interconnection wires needed to communicate between the exhaust sensor 86 and the electronic engine control 65 can be greatly reduced to the minimum of two wires in some embodiments. The individual outputs of the exhaust sensor 86 may each connect to one end of the information node 100 and at least two wires may flow from the information node 100 to the electronic engine control 65. Effectively, using the information node 100 in this fashion reduces the number of wires needed from sixteen to two for proper communication to occur between the exhaust sensor 86 and the electronic engine control 65. Alternatively, it avoids the loss of information that would result from connecting those sensors in an analog fashion.

Each of the information nodes 100 may be individually connected to each engine component 80 for which it is responsible. In additional embodiments, however, other configurations may be used within the gas turbine engine 20. In one such additional embodiment, the information node 100 may be integrated into the actual engine component 80 itself. In this type of configuration, an information node 100 may be integrated into, for example, an actuator 88 to form a smart actuator. This type of configuration would allow for even fewer interconnections between the engine component 80 and electronic engine control 65. In another embodiment of the present disclosure, the information node 100 may be used in a router configuration to attach multiple information nodes to one another and in turn communicate the multiple information nodes with the electronic engine control 65. Once again this type of configuration helps reduce the number of interconnections present within the gas turbine engine 20.

Furthermore, use of the disclosed information node 100 reduces some of the constraints placed on the current interconnections used for communication. Shielding and harness requirements are reduced or eliminated with the use of the information node 100. The output of the information node 100, discussed in detail below, transfers signals in a digital format rather than the analog arrangements now prevalent. Because of this, excessive shielding is not needed to protect the interconnection wires from radio frequencies and lightning strikes as these will not affect the transmission of digital signals to the same degree as currently used analog signals. While the above is only a small sample and illustration of some benefits and configuration options the information node 100 may have with a gas turbine engine 20, other benefits and operational advantages can be appreciated within the actual functional components of the information node 100 described below.

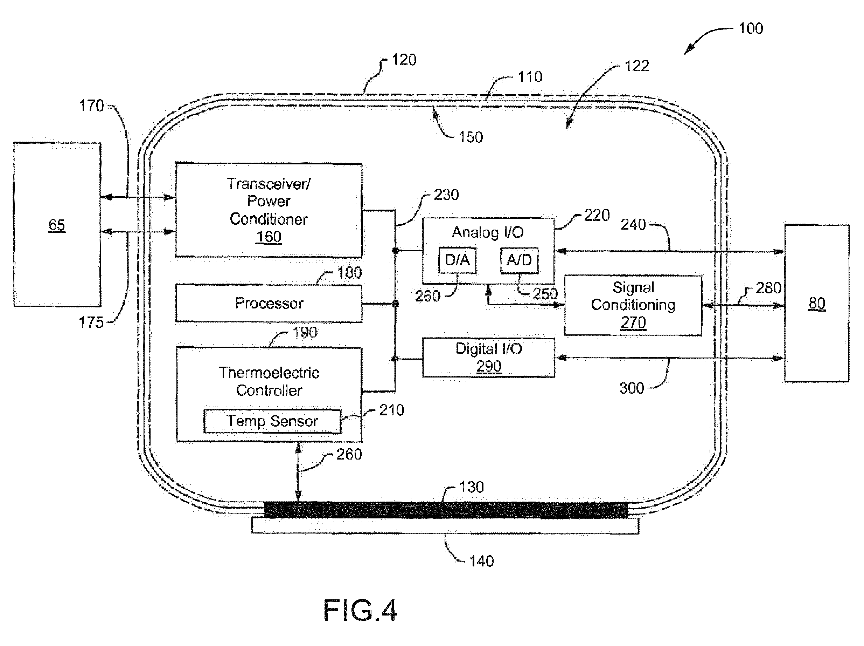

Figure 4 depicts the information node 100 according to an embodiment. In an embodiment, the information node 100 is enclosed by a case 110. The case 110 may have a thermoelectric conditioner 120. The thermoelectric conditioner 120 transfers heat from an interior 122 of the information node 100 to an outside environment surrounding the case 110. Heat is transferred through the thermoelectric conditioner 120 using electric current and is dissipated in a particular direction (in or out) dependent on the direction that the current travels through the thermoelectric conditioner 120. To accomplish this, a thermoelectric conditioner path 130 is provided at the bottom of the information node 100. The thermoelectric conditioner path 130 determines the direction in which the current will travel around the case 110 through the thermoelectric conditioner 120.

Optionally, a thermal conduction path 140 may also be in contact with the thermoelectric conditioner path 130. The thermal conduction path 140 may be filled, for example, with a solid, fluid, or gaseous medium. The thermal conduction path 140 filled with such medium may help facilitate the dissipation of heat from the information node 100 via conduction or convection. Dissipative heat transferred to the outside of the case 110 with the thermoelectric conditioner 120 would then be in contact with the thermal conduction path 140. This contact increases the transfer of heat from the information node 100 to the outside environment helping cool and maintain an acceptable operation temperature within the information node 100.

According to an embodiment, the interior 122 of the case 110 may optionally also be provided with thermal insulation 150. Like the thermal conduction path 140, the thermal insulation 150 helps to regulate the temperature within the information node 100. The thermal insulation 150 may be any type of insulation material which operates to help shield the internal electronics of the information node 100 from heat created by the gas turbine engine 20 outside of the information node 100. The thermal insulation 150 shields the internal components of the information node 100 by preventing the transfer of heat from the outside environment into the information node 100. By shielding the dissipation of heat into the information node 100, the thermal insulation 150 also helps maintain a cool and acceptable operational temperature for the internal electronics of the information node 100.

Still referring to Figure 4, the internal electronics of the information node 100 are depicted. The internal electronics of the information node 100 may be provided individually, as described below, or may be part of a common chip set. According to one embodiment, as shown in Figure 4, a transceiver/power conditioner 160 may be provided within the information node 100. The transceiver/power conditioner 160 serves dual purposes within the information node 100. First as a transceiver, the transceiver/power conditioner 160 can transmit and receive electronic signals from an outside source connected to the transceiver/power conditioner 160. Secondly, the transceiver/power conditioner 160 operates as a power conditioner. As a power conditioner, the transceiver/power conditioner 160 receives power from an outside source to power the information node 100. Additionally, the power conditioner component of the transceiver/power conditioner 160 may regulate the voltage of the power received so that the information node 100 functions and operates correctly.

The dual purposes of the transceiver/power conditioner 160 are further evident in its connection to components outside of the information node 100. The transceiver/power conditioner 160 is connected to outside components by at least one data/power transmission line 170. Through the data/power transmission line 170, the information node 100 may be connected to additional information nodes to form a network, Additionally, through the data/power transmission line 170 the information node 100 may connect to the electronic engine control 65. The data/power transmission line 170 functions to send and receive both power and electronic signal information thereby allowing communication between the multiple information nodes connected to the data/power transmission line 170 and the electronic engine control 65. This overall design and architecture allows for the information node 100 to be placed in areas of higher operational temperatures within the gas turbine engine 20 than previously possible. In additional embodiments, the data/power transmission line 170 may be separated into individual dedicated lines for data and power conveyance.

In conjunction with the data/power transmission line 170 a ground line 175 may be provided. The ground line 175 connects the ground connection of the transceiver/power conditioner 160 to the ground connection of the electronic engine control 65. In an alternate embodiment, a ground line 175 may not be needed if the information node 100 is sufficiently grounded to the engine component 80 and not to the electronic engine control 65.

Also connected to the transceiver/power conditioner 160 is a processor 180. The processor 180 operates the internal components of the information node 100. The processor 180, for example, may be a central processing unit that is able to execute specific algorithms and software programs relating to the engine component 80 to which the information node 100 is connected. The processor 180 gathers, identifies, computes, calculates, and correlates information received by the information node 100 from the connected engine component 80. The processor 180 may then relay that information to the electronic engine control 65 and other information nodes connected to the information node 100 through the data/power transmission line 170. The processor 180, may be a general purpose processor that is programmable either at assembly, at the time of installation, at any time after installation, or any combination thereof. As a result of the programmability of the processor 180, a single information node 100 architecture may be used to control or monitor any of a number of electronic components of the gas turbine engine 20.

Another internal component of the information node 100 is the thermoelectric controller 190. The thermoelectric controller 190 is connected to the transceiver/power conditioner 160, as well as the processor 180 of the information node 100. The thermoelectric controller 190 may also be responsible for controlling the thermoelectric conditioner 120 provided within the case 110 of the information node 100. By controlling the thermoelectric conditioner 120, the thermoelectric controller 190 may adjust the operation of the thermoelectric conditioner 120 so that the temperature within the information node 100 is maintained at a proper operational temperature. The thermoelectric controller 190 may send and receive signals from the thermoelectric conditioner path 130 through a thermoelectric signal connection 260 Through the thermoelectric signal connection 260 the thermoelectric controller 190 may direct the thermoelectric conditioner 120 to change or adjust the flow path of electric current around the thermoelectric conditioner path 130, thereby aiding in the cooling of the information node 100. By way of this thermoelectric signal connection 260 electric current is provided to the thermoelectric conditioner 120 and, in turn, the thermoelectric conditioner path 130.

Additionally, the thermoelectric controller 190 may have a temperature sensor 210. The temperature sensor 210 may obtain the current temperature within the information node 100. The thermoelectric controller 190 may transmit this temperature information to the processor 180 for the processor 180 to determine if the current temperature is within a safe operational range for the information node 100. If the current temperature is deemed to be within a safe operational range, the thermoelectric controller 190 will continue cooling the information node 100 with the current operational conditions. If, however, the current temperature is deemed too hot for the safe operational range, the processor 180 may send a signal to the thermoelectric controller 190 to in turn signal the thermoelectric conditioner 120 to operate with greater efficiency and thus further cool the information node 100 to an acceptable operational temperature.

The information node 100 may also be configured to receive information from outside engine components 80. As viewed in Figure 4, the information node 100 may have an analog input and output module 220. One end of the analog input and output module 220 connects to each of the transceiver/power conditioner 160, the processor 180, and the thermoelectric controller 190. The analog input and output module 220 is connected to the transceiver/power conditioner 160, the processor 180, and the thermoelectric controller 190 through the internal data and power bus 230 of the information node 100. At the opposite end of the analog input and output module 220, an analog connection 240 is provided to connect the analog input and output module 220 to an outside engine component 80. The analog connection 240 may receive analog signals from the outside engine component 80, which may be any number of different electronic elements such as, but not limited to, thermocouples, resistance temperature detectors, voltages sources, frequency sources, sensors, or actuators.

Furthermore, the analog input and output module 220 may have an analog to digital converter 250 and a digital to analog converter 260. The analog to digital converter 250 is available so that analog signals received by the analog input and output module 220 can be reprocessed into a digital format. The reprocessed digital format may then be used by the processor 180 for algorithmic or executable software purposes. Additionally, the reprocessed digital format may travel out of the information node 100 and communicate back to the electronic engine control 65. Moreover, digital signals sent from the electronic engine control 65 may enter the information node 100 and be reprocessed by the digital to analog converter 260 to repurpose the signal into a reprocessed analog format. From there, the reprocessed analog format can be sent to the connected outside engine component 80. Repurposing the sent and received signals in this fashion allows for proper communication between the outside engine components 80 and the electronic engine control 65.

Further connected to the analog input and output module 220 is a signal conditioning module 270. At one end, the signal conditioning module 270 connects to the analog input and output module 220. At the opposite end of the signal conditioning module 270, a signal conditioning connection 280 is provided to connect the signal conditioning module 270 to an outside engine component 80 or to multiple engine components 80. The signal conditioning module 270 receives and handles multiple and varied analog input signals from the multiple engine components 80 during operation of the gas turbine engine 20. The signal conditioning connection 280 may receive these multiple analog signals from the outside engine components 80. After receiving these multiple analog signals within the signal conditioning module 270, the signal conditioning module 270 manipulates the received analog signals so that they may then proceed to the analog input and output module 220 for analog to digital conversion. From there, the signal may travel though the rest of the information node 100 and through the data/power transmission line 170 to communicate with the other information nodes and electronic engine control 65 attached to the data/power transmission line 170.

Also provided within the information node 100 is a digital input and output module 290. One end of the digital input and output module 290 is in communication with each of the transceiver/power conditioner 160, the processor 180, and the thermoelectric controller 190 through the internal data and power bus 230 of the information node 100. At the opposite end of the digital input and output module 290, a digital connection 300 is provided, thereby allowing communication between the digital input and output module 290 and the outside engine component 80. The electronic architecture of the information node 100 functions on a digital signal platform. Therefore, digital signals received by the digital input and output module 290 do not have to be converted from the digital signal format sent by the outside engine component 80. Moreover, digital signals received by the transceiver/power conditioner 160 from either additional information nodes or the electronic engine control 65 do not have to be converted to a different signal format since the outside engine component 80 is capable of sending and receiving digital signals.

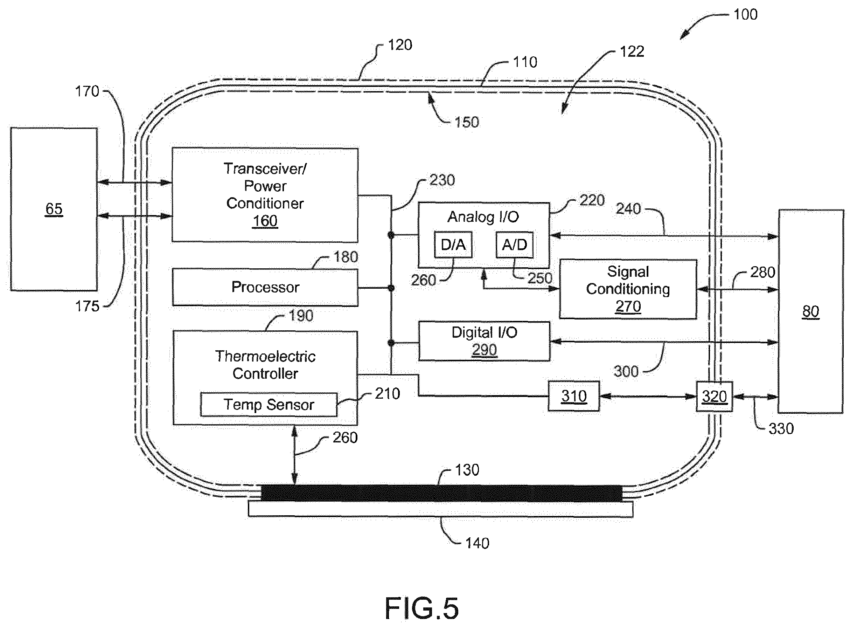

Referring now to Figure 5, a transducer 310 is depicted within the information node 100, according to an additional embodiment. The information node 100 provides universal architecture to connect to a multitude of outside engine components 80. Not every connection for the information node 100 is electronically based. The information node 100 may also connect to pneumatic based sensors and actuators as the outside engine component 80. Therefore, in an alternate embodiment of the present disclosure a transducer 310 may be contained within the information node 100. At one end of the transducer 310, the transducer 310 connects to a tubular input 320 located on the edge of the case 110 of the information node 100. The tubular input 320 is operative to connect through a tubular connection 330 to outside engine components 80 to receive a fluid flow into the tubular input 320. Although in this alternative embodiment a tubular input 320 is provided, the input may be able to receive other information, such as brightness, from a connected engine component 80 to be used by the transducer 310. Based on the pressure exerted by the fluid flow into the tubular input 320, the transducer 310 is operative to convert the pressure measurements into electronic signals. The pressure measurement may be converted to a digital signal format with the transducer 310. At the opposite end of the transducer 310, the transducer 310 connects to the internal data and power bus 230 of the information node 100. This allows the digital signals produced by the transducer 310 to be communicated to the electronic engine control 65 and other information nodes connected to the information node 100 through the data/power transmission line 170. By placing a transducer 310 within the cooled information node 100, the transducer is isolated from external temperature changes characteristic of engine operations and so can operate in higher temperature environments and/or at increased accuracy

Alternately, a transducer adapter may be used for connection to the information node 100. In this additional alternate embodiment, a transducer adapter may connect at one end to the digital input and output module 290 of the information node 100 outside of the case 110. At the other end of the transducer adapter, a transducer input is present. This input may be operative to receive a fluid flow for pressure measurement or be operable to receive brightness for measurement from an outside engine component 80. Within the transducer 310 of the transducer adapter the pressure or brightness from the outside engine component 80 is measured, and that measurement is converted into an electronic digital signal. The electronic digital signal can than travel into the information node 100 through the digital input and output module 290 so the electronic digital signal created by the transducer adapter can be communicated to the electronic engine control 65 or other information nodes connected to the information node 100 with the transducer adapter.

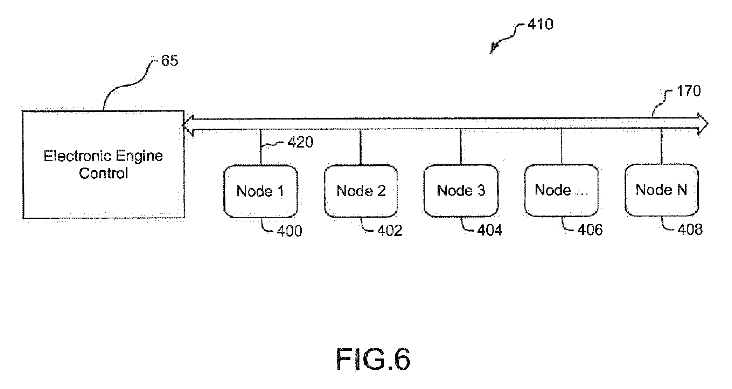

Multiple different network architectures may be used to connect a plurality of information nodes 400, 402, 404, 406, and 408 to the electronic engine control 65. For example, as depicted in Figure 6, the plurality of information nodes 400, 402, 404, 406, and 408 are in serial communication with a data/power transmission line 170 to form a linear architecture configuration 410. Each node of the plurality of information nodes 400, 402, 404, 406, and 408 individually connects 420 to the data/power transmission line 170. In addition to being in communication with each of the plurality of information nodes 400, 402, 404, 406, and 408, the data/power transmission line 170 is in communication with the electronic engine control 65. In such a linear architecture configuration 410, each node of the plurality of information nodes 400, 402, 404, 406, and 408 may communicate with one another since each node of the plurality of information nodes 400, 402, 404, 406, and 408 shares a common data/power transmission line 170. Additionally, each node of the plurality of information nodes 400, 402, 404, 406, and 408 may communicate and receive power from the electronic engine control 65 as each node of the plurality of information nodes 400, 402, 404, 406, and 408 is in communication with the same data/power transmission line 170 and in turn the electronic engine control 65.

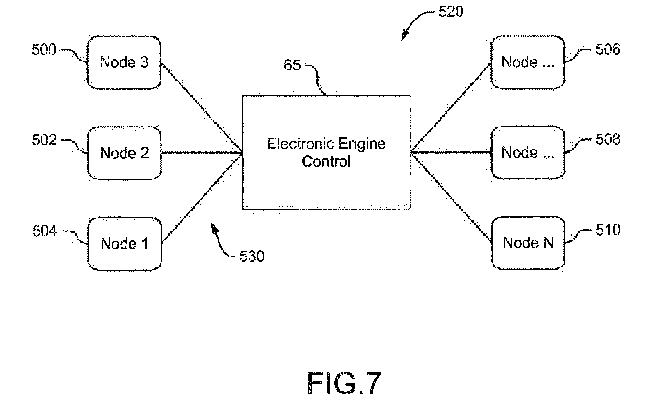

In an additional embodiment depicted in Figure 7, the plurality of information nodes 500, 502, 504, 506, 508, and 510 may communicate with the electronic engine control 65, itself located in the center of a star-shaped network architecture 520. In the star-shaped network architecture 520, the electronic engine control 65 is located centrally within the network. Each node of the plurality of information nodes 500, 502, 504, 506, 508, and 510 is then in communication with the electronic engine control 65 by a single data/power transmission line 530 connecting each node of the plurality of information nodes 500, 502, 504, 506, 508, and 510 to the electronic engine control 65. Each node of the plurality of information nodes 500, 502, 504, 506, 508, and 510 has its own single data/power transmission line 530 and does not connect to or share a common data/power transmission line with any additional nodes of the plurality of information nodes 500, 502, 504, 506, 508, and 510. In the star-shaped network architecture 520, the plurality of information nodes 500, 502, 504, 506, 508, and 510 branch out around the electronic engine control 65 located centrally within the star-shaped network architecture 520. For one node of the plurality of information nodes 500, 502, 504, 506, 508, and 510 to communicate with another node of the plurality of information nodes 500, 502, 504, 506, 508, and 510, an information signal sent from one information node is routed through the electronic engine control 65 before being received by a another information node.

In one embodiment, the general architecture of the information node 100, including, for example, the processor 180, digital input and output module 290, analog input and output module 220, are standardized and other components may be installed into a standard port or bus (not shown) in order to modify the input, output, and/or control capabilities of the information node 100.

Although the information node 100 depicted above has been described with respect to its applicability to a gas turbine engine 20, it would be understood that the information node 100 may be similarly programmed for use in automotive, marine, aerospace, power generation, or other areas where efficient programmable information nodes would provide an advantage.

While the principles of the present disclosure may be applied to many possible embodiments, it should be recognized that the embodiments described herein and depicted in the attached figures are meant to be illustrative only and should not be taken as limiting the scope of the claims. Therefore, the techniques as described herein contemplate all such embodiments that may come with the scope of the following claims and equivalents thereof. In addition, the various components may communicate either through a communication method connected to the components or wirelessly.

### INDUSTRIAL APPLICABILITY

From the foregoing, it will be appreciated that the cooled information node disclosed herein may have industrial applicability in a variety of settings such as, but not limited to, use in a gas turbine engine. For example, such gas turbine engines can be those present on aircraft to provide thrust, or in land or aircraft based systems for providing power. However, such a cooled information node includes a universal architecture and component structure so that the disclosed cooled information node is not limited to use only within a gas turbine engine. The cooled information node may also be used, for example, in other engine or work environments where excessive heat produced by an engine or working environment may disable and prevent proper operation of electronic components. Alternatively, the cooled information node may also be used in automotive and trucking engines, other aerospace machines for generating thrust, helicopters for generating lift, other industrial or mining applications, drilling equipment and machines, equipment for generating power, down-hole systems, chemical plants, electronics used in a vacuum type environment such as outer space, or any other electronic equipment used in a thermally challenged environment.

Additionally, in the field of gas turbine engines for aviation, use of such a cooled information node helps to relax the thermal constraints placed on preexisting network architecture and placement of distributed electronics within the thermally challenged environment. By reducing these thermal constraints, the complexity and weight of the interconnections between the cooled information nodes within a gas turbine engine can be greatly reduced. Additionally, use of such a cooled information node helps enhance design freedom by enabling selection of lower temperature capable components for use within a gas turbine engine. Furthermore, such a cooled information node helps facilitate the use of new network architectures and configurations previously rendered inoperable within the current confines of a gas turbine engine. Moreover, use of such a cooled information node helps to reduce the cost of production of gas turbine engines by allowing the use of less expensive components, fewer interconnections, and universal standardization of applicable electronic components which do not have to be designed and based around the thermally challenged gas turbine engine environment.

While the foregoing detailed description has addressed only specific embodiments, it is to be understood that the scope of the disclosure is not intended to be limiting. Thus, the breadth and spirit of this disclosure is intended to be broader than any of the embodiments specifically disclosed and/or encompassed within the claims appended hereto.

The following clauses set out features of the invention which may or may not presently be claimed in this application but which may form basis for future amendment or a divisional application.
1. An information node, the information node comprising:
   a case with a thermoelectric conditioner;
   a processor, the processor programmable to control the function of the information node;
   a thermoelectric controller operable to control the thermoelectric conditioner;
   an input configured to receive data from at least one component; and
   an output configured to transmit data to a controller.
2. The information node according to clause 1, wherein the output configured to transmit data to the controller is connected to a transceiver/power conditioner within the information node, the transceiver/power conditioner being in communication with the thermoelectric controller and the processor of the information node.
3. The information node according to clause 2, wherein the thermoelectric controller, the transceiver/power conditioner, the processor, the input, and the output are contained as part of a common chip set.
4. The information node according to clause 1, wherein the thermoelectric controller has a temperature sensor and is in communication with a thermoelectric conditioner path of the case with the thermoelectric conditioner.
5. The information node according to clause 2, wherein the transceiver/power conditioner is in communication with the controller to send and receive a first data signal and power through at least one data/power transmission line.
6. The information node according to clause 1, wherein the input contains both an analog input and output module and a digital input and output module, the analog input and output module being configured to send and receive a second data signal from the second outside source and the digital input and output module being configured to send and receive the second data signal from the second outside source.
7. The information node according to clause 6, wherein the input further contains a transducer, the transducer configured to send and receive the second data signal from the second outside source.
8. The information node according to clause 6, wherein a signal conditioning module is in communication with the analog input and output module, the signal conditioning module being configured to send and receive the second data signal from the second outside source.
9. A gas turbine engine, comprising:
   at least one engine component;
   an electronic engine control; and
   at least one information node, the at least one information node including a case with a thermoelectric conditioner, a processor programmable to control the function of the at least one information node, a thermoelectric controller operable to control the thermoelectric conditioner, an input configured to receive data from the at least one engine component, and an output configured to transmit data to the electronic engine control.
10. The gas turbine engine according to clause 9, wherein the output configured to transmit data to the electronic engine control is connected to a transceiver/power conditioner within the at least one information node, the transceiver/power conditioner being in communication with the thermoelectric controller and the processor of the at least one information node.
11. The gas turbine engine according to clause 10, wherein the thermoelectric controller, the transceiver/power conditioner, the processor, the input, and the output of the at least one information node are contained as part of a common chip set.
12. The gas turbine engine according to clause 9, wherein the thermoelectric controller of the at least one information node has a temperature sensor and connects to a thermoelectric conditioner path of the case with the thermoelectric conditioner.
13. The gas turbine engine according to clause 10, wherein the transceiver/power conditioner of the at least one information node is in communication with the electronic engine control to send and receive a first data signal and power through at least one data/power transmission line.
14. The gas turbine engine according to clause 9, wherein the input of the at least one information node contains both an analog input and output module and a digital input and output module, the analog input and output module being configured to send and receive a second data signal from the at least one engine component and the digital input and output module being configured to send and receive the second data signal from the at least one engine component.
15. The gas turbine engine according to clause 14, wherein the input of the at least one information node further contains a transducer, the transducer configured to send and receive the second data signal from the at least one engine component.
16. The gas turbine engine according to clause 14, wherein a signal conditioning module connects to the analog input and output module of the at least one information node, the signal conditioning module being configured to send and receive the second data signal from the at least one engine component.
17. A network of information nodes for use within a thermally challenged environment, the network comprising:
   an electronic engine control; and
   a plurality of information nodes in communication with the electronic engine control, the plurality of information nodes each having a case with a thermoelectric conditioner, a processor programmable to control the function of the at least one information node, a thermoelectric controller operable to control the thermoelectric conditioner, an input of each of the plurality of information nodes configured to receive data from at least one engine component, and an output of each of the plurality of information nodes configured to transmit data to the electronic engine control.
18. The network according to clause 17, wherein the output of each of the plurality of information nodes configured to transmit data to the electronic engine control is connected to a transceiver/power conditioner within each of the plurality of information nodes, the transceiver/power conditioner being in communication with the thermoelectric controller and the processor of each of the plurality of information nodes, and each of the plurality of information nodes being connected to the electronic engine control through a data/power transmission line.
19. The network according to clause 18, wherein the data/power transmission line is a common data/power transmission line to which each of the plurality of information nodes connects forming a linear architecture configuration.
20. The network according to clause 18, wherein each of the plurality of information nodes is connected to the electronic engine control through a single data/power transmission line connecting each of the plurality of information nodes individually to the electronic engine control.

## Claims

1. An information node (110), the information node comprising:
a case (110) with a thermoelectric conditioner (120);
a processor (180), the processor programmable to control the function of the information node;
a thermoelectric controller (190) operable to control the thermoelectric conditioner (120);
an input configured to receive data from at least one component (80); and
an output configured to transmit data to a controller (65).

2. The information node (100) according to claim 1, wherein the output configured to transmit data to the controller (65) is connected to a transceiver/power conditioner (160) within the information node (100), the transceiver/power conditioner (160) being in communication with the thermoelectric controller (190) and the processor (180) of the information node.

3. The information node (100) according to claim 2, wherein the thermoelectric controller (190), the transceiver/power conditioner (160), the processor (180), the input, and the output are contained as part of a common chip set.

4. The information node (100) according to claim 1, 2 or 3, wherein the thermoelectric controller (190) has a temperature sensor (210) and is in communication with a thermoelectric conditioner path (130) of the case (110) with the thermoelectric conditioner (120).

5. The information node (100) according to claim 2, 3 or 4, when dependent on claim 2, wherein the transceiver/power conditioner (160) is in communication with the controller (65) to send and receive a first data signal and power through at least one data/power transmission line (170).

6. The information node (100) according any preceding claim, wherein the input contains both an analog input and output module (220) and a digital input and output module (290), the analog input and output module (220) being configured to send and receive a second data signal from the second outside source (80) and the digital input and output module (290) being configured to send and receive the second data signal from the second outside source (80).

7. The information node (100) according to claim 6, wherein the input further contains a transducer (310), the transducer (310) configured to send and receive the second data signal from the second outside source (80).

8. The information node (100) according to claim 6 or 7, wherein a signal conditioning module (270) is in communication with the analog input and output module (220), the signal conditioning module being configured to send and receive the second data signal from the second outside source (80).

9. A gas turbine engine (20), comprising:
at least one engine component (80);
an electronic engine control (65); and
at least one information node (100), the at least one information node (100) comprising an information node (100) as claimed in any preceding claim, wherein the at least one component comprises at least one engine component (80) and the controller comprises said electronic engine control (65).

10. The gas turbine engine (20) according to claim 9 when dependent on any of claims 6 to 8, wherein the second outside source comprises at least one engine component (80), the analog input and output module (220) being configured to send and receive a second data signal from the at least one engine component (80) and the digital input and output module (290) being configured to send and receive the second data signal from the at least one engine component (80).

11. A network of information nodes (100) for use within a thermally challenged environment, the network comprising:
an electronic engine control (65); and
a plurality of information nodes (100) in communication with the electronic engine control (65), the plurality of information nodes each comprising an information node (100) as claimed in any of claims 1 to 9, wherein the at least one component comprises at least one engine component (80) and the controller comprises said electronic engine control (65), each of the plurality of information nodes (100) having a case (110) with a thermoelectric conditioner (120), a processor (180) programmable to control the function of the information node (100) and a thermoelectric controller (190) operable to control the thermoelectric conditioner (120), an input of each of the plurality of information nodes (100) configured to receive data from at least one engine component (80), and an output of each of the plurality of information nodes configured to transmit data to the electronic engine control (65).

12. The network according to claim 11, wherein the output of each of the plurality of information nodes (100) configured to transmit data to the electronic engine control (65) is connected to a transceiver/power conditioner (160) within each of the plurality of information nodes, the transceiver/power conditioner (160) being in communication with the thermoelectric controller (190) and the processor (180) of each of the plurality of information nodes (100), and each of the plurality of information nodes being connected to the electronic engine control (65) through a data/power transmission line (170).

13. The network according to claim 12, wherein the data/power transmission line (170) is a common data/power transmission line to which each of the plurality of information nodes (100; 400, 402, 404, 406, 408) connects forming a linear architecture configuration (410).

14. The network according to claim 12, wherein each of the plurality of information nodes (100; 500, 502, 504, 506, 508, 510) is connected to the electronic engine control (65) through a single data/power transmission line (530) connecting each of the plurality of information nodes individually to the electronic engine control (65).
